Europäisches Patentamt

European Patent Office

Office européen des brevets

(19)

(11) EP 0 642 719 B1

(12) **EUROPÄISCHE PATENTSCHRIFT**

(45) Veröffentlichungstag und Bekanntmachung des Hinweises auf die Patenterteilung:
**11.09.1996 Patentblatt 1996/37**

(21) Anmeldenummer: **93909786.1**

(22) Anmeldetag: **18.05.1993**

(51) Int Cl.6: **H04H 5/00**, H04S 1/00, H04B 1/66

(86) Internationale Anmeldenummer:
**PCT/DE93/00448**

(87) Internationale Veröffentlichungsnummer:
**WO 93/25015 (09.12.1993 Gazette 1993/29)**

(54) **VERFAHREN ZUR REDUZIERUNG VON DATEN BEI DER ÜBERTRAGUNG UND/ODER SPEICHERUNG DIGITALER SIGNALE MEHRERER VONEINANDER ABHÄNGIGER KANÄLE**

PROCESS FOR REDUCING DATA IN THE TRANSMISSION AND/OR STORAGE OF DIGITAL SIGNALS FROM SEVERAL INTERDEPENDENT CHANNELS

PROCEDE VISANT A REDUIRE LES DONNEES LORS DE LA TRANSMISSION ET/OU DE LA MEMORISATION DE SIGNAUX NUMERIQUES PROVENANT DE PLUSIEURS CANAUX INTERDEPENDANTS

(84) Benannte Vertragsstaaten:
**AT BE CH DE DK ES FR GB GR IE IT LI NL PT SE**

(30) Priorität: **25.05.1992 DE 4217276**

(43) Veröffentlichungstag der Anmeldung:
**15.03.1995 Patentblatt 1995/11**

(73) Patentinhaber: **FRAUNHOFER-GESELLSCHAFT ZUR FÖRDERUNG DER ANGEWANDTEN FORSCHUNG E.V.**
**80636 München (DE)**

(72) Erfinder:
- **HERRE, Jürgen**
  **D-91054 Buckenhof (DE)**
- **SEITZER, Dieter**
  **D-8520 Erlangen (DE)**
- **BRANDENBURG, Karl-Heinz**
  **D-8520 Erlangen (DE)**
- **EBERLEIN, Ernst**
  **D-8521 Gro enseebach (DE)**

(56) Entgegenhaltungen:
EP-A- 0 402 973          WO-A-88/01811
DE-C- 4 136 825

- **ISO/IEC JTC 1/SC 29, TOKYO, JP, 20. APRIL 1992: 'CODED REPRESENTATION OF AUDIO, PICTURE MULTIMEDIA AND HYPERMEDIA INFORMATION'**
- **ICASSP 91 Toronto, Canada, 14. Mai 1991, vol 5, Seiten 3601-3604, R.G. VAN DER WAAL ET AL. :'Subband Coding of Stereophonic Digital Audio Signals'**
- **ICASSP 89 GLASGOW, GB, 23. Mai 1989, vol. 3, Seiten 1993-1996, J.D. JOHNSTON : 'Perceptual Transform Coding of Wideband Stereo Signals'**

## Beschreibung

Technisches Gebiet

Die Erfindung bezieht sich auf ein Verfahren zur Reduzierung von Daten bei der Übertragung und/oder Speicherung digitaler Signale mehrerer voneinander abhängiger Kanäle.

Verfahren, bei denen Audiosignale frequenzcodiert übertragen werden, sind beispielsweise aus den PCT-Veröffentlichungen WO 88/001811 und WO 89/08357 bekannt. Auf diese Druckschriften sei zur Erläuterung der hier nicht näher erklärten Begriffe ausdrücklich Bezug genommen.

Für den Bitstrom des zu übertragenden Signals und die Ausgestaltung eines Decoders wurde von dem Standardisierungsgremium Moving Pictures Experts Group (MPEG) der Internationalen Standardisierungs-Organisation (ISO) der Standard ISO-11172-3 festgelegt.

Viele bekannte Verfahren zur datenreduzierten Codierung digitaler Audiosignale codieren die Signale im Frequenzbereich und benützen zur Übertragung der Signale aus dem Zeitbereich in den Frequenzbereich (in Spektralwerte) eine geeignete Abbildungstechnik z.B. eine "FFT", "DCT", "MDCT", "Polyphasenfilterbank" oder "Hybridfilterbank".

Mit diesen Verfahren ist ein hoher Grad an Ausnutzung von Signal-Redundanz und Irrelevanz bezüglich der Eigenschaften des menschlichen Ohres erreichbar.

Wenn bei der Übertragung von Signalen mehrerer Kanäle die Signale nicht unabhängig voneinander sind, ist eine zusätzliche Reduzierung der zu übertragenden Datenmenge möglich. Diese Voraussetzung ist beispielsweise bei Signalen in den Kanälen eines quadrophonen oder stereophonen Audiosignals erfüllt.

Neuerdings wird an der Weiterentwicklung des internationalen Standards zur Übertragung mehrerer Kanäle gearbeitet. In der Fachveröffentlichung "MUSICAM-Surround: A Universal Multichannel Coding System Compatible with ISO 11172-3", 93 rd AES Convention, 1992, San Francisco, wird ein Verfahren zur Übertragung von bis zu 5 Kanälen vorgeschlagen. Beispielsweise können zwei Stereokanäle und zusätzlich ein Mittenkanal sowie zwei Seitenkanäle (3/2 Stereofonie) oder zwei Stereokanäle und drei Kommentar-Kanäle übertragen werden. Auch bei diesen Verfahren sind die Signale in den einzelnen Kanälen voneinander abhängig.

Stand der Technik

Ein Verfahren zur Ausnutzung der Redundanz/Irrelevanz zwischen zwei Kanälen eines Stereo-Audiosignals ist in der Veröffentlichung von J.D. Johnston, "Perceptual Transform Coding of Wideband Stereo Signals", ICASSP 89, beschrieben. Bei dieser sogenannten M/S-Codierung (Mitte/Seite-Codierung) wird anstatt dem linken und rechten Kanal die Summe (= Mitte) und die Differenz (= Seite) des Stereosignals codiert. Dadurch wird eine Einsparung bei der Menge der zu übertragenden Daten erreicht.

Die Abhängigkeit der Signale zweier Stereokanäle nutzt auch das aus der Veröffentlichung "Subband Coding of Stereophonie Digital Audio Signals", Proc. of the ICASSP, 1991, s. 3601 bis 3604, bekannt gewordene Intensity-Stereoverfahren aus. Bei diesem Verfahren wird das Monosignal sowie eine zusätzliche Information über die Links/Rechtsverteilung des Signals übertragen.

Durch beide Verfahren können bei ungünstiger Signalzusammensetzung starke Störungen entstehen. Beispielsweise führt eine stark unterschiedliche Signalzusammensetzung im linken und im rechten Kanal bei der M/S-Codierung zu Artefakten, die durch das tatsächlich im Kanal vorhandenem Signal nicht verdeckt werden. Deshalb erzeugt z.B. ein lautes Saxophon-Signal, das fast nur im rechten Kanal enthalten ist, auf dem linken Kanal Störungen, die nicht verdeckt werden und deshalb deutlich wahrnehmbar sind. Bei der Verwendung des Intensity-Stereoverfahrens wird das räumliche Klangbild zerstört, wenn linker und rechter Kanal stark unterschiedliche spektrale Zusammensetzung haben.

Die bekannten Verfahren sind somit nur einsetzbar, wenn keine ungünstige Signalzusammensetzung zu erwarten ist, oder wenn zugunsten der Reduzierung der Datenmenge Störungen in Kauf genommen werden. Darüberhinaus sind die bekannten Verfahren auf die Stereo-Codierung beschränkt.

Darstellung der Erfindung

Der Erfindung liegt die Aufgabe zugrunde, ein Verfahren zur Reduzierung von Daten bei der Übertragung und/oder Speicherung digitaler Signale mehrerer voneinander abhängiger Kanäle bereitzustellen, bei welchem die Abhängigkeit der Signale in den verschiedenen Kanälen ausgenutzt wird und das zu keiner subjektiv wahrnehmbaren Störung der übertragenen Signale führt.

Diese Aufgabe wird durch ein Verfahren mit den Merkmalen des Anspruchs 1 gelöst.

Erfindungsgemäß werden die Signale der verschiedenen Kanäle zunächst in Spektralbereiche überführt. Anschließend wird unter Zuhilfenahme der Spektralwerte korrespondierender Blöcke mehrerer Kanäle eine Bilanzierung der erforderlichen Datenrate für eine getrennte Codierung der Kanäle, also für eine Monocodierung der Kanäle, sowie für eine gemeinsame Codierung mehrerer Kanäle durchgeführt. Eine gemeinsame Codierung der betreffenden Kanäle erfolgt, solange die Datenrate für die gemeinsame Codierung die Datenrate für die getrennte Codierung der Kanäle nicht um einen vorgebbaren Wert übersteigt. In diesem Fall ähneln sich die Spektralwerte der korrespondierenden Blöcke, so daß eine gemeinsame Codierung bevorzugt wird.

Wenn die Datenrate für die gemeinsame Codierung die Datenrate für die Monocodierung um den vorgebbaren Wert übersteigt, erfolgt eine Monocodierung der Kanäle. In diesem Fall sind die Spektralwerte der korrespondierenden Blöcke der Kanäle so unähnlich, daß eine sehr hohe Datenrate nötig wäre, um nicht durch den Codiervorgang Artefakte in jeweils korrespondierenden Kanälen zu erzeugen, die durch das in diesen Kanälen tatsächlich vorhandene Signal nicht verdeckt werden. Zugunsten der sicheren Vermeidung solcher störender Artefakte wird bei dem erfindungsgemäßen Verfahren vorübergehend auf den Einsatz der gemeinsamen Codierung verzichtet.

Weitere Ausgestaltungen und Weiterbildungen der Erfindung sind in den Unteransprüchen gekennzeichnet.

Nach Anspruch 2 wird zur Bilanzierung der erforderlichen Datenraten für die Mono- bzw. die gemeinsame Codierung eine Schätzfunktion SF gebildet, die angibt, mit welcher Bitzahl jeder Abtastwert codiert werden muß, um bei einem vorgegebenen Codierverfahren die durch das Codierverfahren verursachten Störungen unter der Mithörschwelle zu halten.

Bei Codierverfahren, die eine feste Bitzuteilung für die einzelnen Frequenzbänder vorsehen, kann die Schätzfunktion vorab berechnet werden (siehe z. B. Theile G., Stoll G., Link M., Low bit-rate coding of high quality audio signals, in EBU Review No. 230, 1988, S. 158-181).

Bei Codierverfahren mit variabler Bitzahl, wie beispielsweise in der PCT-Veröffentlichung WO 88/001811 beschrieben, ist die Schätzfunktion (SF) passend für das entsprechende Verfahren zu wählen. Eine bevorzugte Schätzfunktion wird weiter unten angegeben.

Bei dem erfindungsgemäßen Verfahren wird somit die SF der möglichen Codierverfahren, nämlich der Monocodierung und der gemeinsamen Codierung mehrerer Kanäle, blockweise verglichen. Aufgrund dieses Vergleichs wird entschieden, ob auf das Signal Monocodierung oder gemeinsame Codierung mehrerer Kanäle angewandt wird.

Bei dem Vergleich der SF von Monocodierung bzw. gemeinsamer Codierung wird nach Anspruch 3 die erforderliche Datenrate für die getrennte Codierung der Signale durch Summenbildung aus der SF der betreffenden Kanäle gewonnen.

Bei der Stereocodierung von zwei Kanälen wird beispielsweise die Schätzfunktion SF (LR) für die getrennte Codierung durch Addition der Schätzfunktionen SF (L) und SF (R) der Signale aus dem linken (L) und dem rechten (R) Kanal gebildet.

Bei einer vorteilhaften Ausgestaltung des Verfahrens erfolgt die gemeinsame Codierung der Kanäle nach Anspruch 4 durch Bildung von Lionearkombinationen (Matrizierung) der Eingangssignale. Nach der Decodierung des Signals wird die Matrizierung wieder rückgängig gemacht (Dematrizierung). Bei der Übertragung von zwei Stereokanälen erfolgt die Codierung mit Hilfe der Mitte/Seite (M/S) Stereocodierung. Bei dieser Codierung werden anstelle des linken und des rechten Kanals die Summe (= Mitte) und die Differenz (= Seite) der Signale aus dem linken und dem rechten Kanal codiert. Daduch wird eine Einsparung der zu übertragenden Datenmenge erreicht.

Gemäß Anspruch 5 wird die Schätzfunktion SF (Mijk ...) der erforderlichen Datenrate für die gemeinsame Codierung von Signalen aus Kanälen Ki, Kj, Kk ... durch Addition der Schätzfunktionen SF (Mi), SF (Mj), SF (Mk) ... gebildet, wobei Mi der i-te matrizierte Kanal ist.

Bei der Codierung von zwei Stereokanälen wird die Schätzfunktion der erforderlichen Datenrate für die gemeinsame Codierung der Signale durch Summenbildung der SF des Mitte-Signals (M) und des Seite-Signals (S) gewonnen. Dabei wird das Mitte-Signal aus dem Signal (L) des linken und dem Signal (R) des rechten Kanals durch die Beziehung

$$M = \frac{L + R}{\sqrt{2}}$$

gebildet und das Seite-Signal (S) durch die Beziehung

$$S = \frac{L - R}{\sqrt{2}}.$$

Bei einer vorteilhaften Weiterentwicklung der Erfindung gemäß Anspruch 6 wird vor der Bilanzierung der erforderlichen Datenrate die benötigte Genauigkeit der Codierung festgelegt. Hierzu wird zunächst eine maximal erlaubte Störung vorgegeben. In keinem Kanal darf die tatsächlich auftretende Störung diese erlaubte Störung übersteigen.

Für die Codierung von zwei Stereokanälen wird in Abhängigkeit von dem jeweiligen Signal für beide Kanäle diejenige Mithörschwelle aus dem akustischen Modell berechnet, die diese Bedingung gewährleistet. Aus den beiden berechneten Mithörschwellen wird die minimale Schwelle für die Codierung beider Kanäle herangezogen. Durch dieses Verfahren ist gewährleistet, daß das erlaubt Störsignal nie überschritten wird.

Bei einer vorteilhaften Weiterbildung der Erfindung wird nach Anspruch 7 als Schätzfunktion die sogenannte Perceptual Entropy (PE, Wahrnehmungsbezogene Entropie) eingesetzt. Die PE eines Audiosignals ist die minimale Datenrate, die bei vorgegebener Codierung benötigt wird, um das Audiosignal ohne subjektiv wahrnehmbare Veränderung codieren und decodieren zu können. Die Bestimmung der PE ist beispielsweise beschrieben in J. D. Johnston, Estimation of Perceptual Entropy, Using Noice Masking Criteria, ICASSP 1988, S. 2524 - 2527.

Nach Anspruch 8 erfolgt die Bilanzierung der erforderlichen Datenrate mit Hilfe der Beziehung SF (Mijk...) < $C_1$ SF (Ki, Kj, Kk ...) + $C_2$, wobei $C_1$ und $C_2$ vorgebbare Konstanten sind. Wenn die Spektralwerte aus den korrespondierenden Blöcken der betreffenden Kanäle die angegebene Beziehung erfüllen, erfolgt die gemeinsame Codierung. Im Falle der Stereocodierung von zwei Kanälen lautet die Beziehung: $SF (MS) < C_1 SF (LR) + C_2$.

Je kleiner die Konstanten $C_1$ und $C_2$ gewählt werden, desto stärker müssen sich die Spektralwerte der Signale aus den Kanälen ähneln, um die Bedingung für die gemeinsame Codierung zu erfüllen. Desto größer ist auch die Wahrscheinlichkeit, daß ein bei der Codierung durch einen anderen Kanal erzeugtes Störsignal durch das tatsächlich im Kanal vorhandene Signal verdeckt wird. Bevorzugte Werte für die Konstanten $C_1$ und $C_2$ sind in den Ansprüchen 9 und 10 gekennzeichnet.

Die wesentlichen Vorteile der Erfindung bestehen darin, daß ohne nennenswerte Erhöhung der Komplexität des Übertragungsverfahrens eine zusätzliche Datenreduktion erreicht wird. Artefakte, die durch eine gemeinsame Codierung mehrerer Kanäle in jeweils anderen Kanälen hervorgerufen werden können, werden sicher vermieden. Das erfindungsgemäße Verfahren ist unabhängig vom spezifischen Aufbau des verwendeten Codierungsverfahrens und ist dadurch vielseitig einsetzbar. Das Verfahren bedarf lediglich einer zusätzlichen Signalbearbeitung in dem in geringen Stückzahlen benötigten Coder auf der Senderseite, jedoch nicht im Decoder, der in großen Stückzahlen von Endverbrauchern eingesetzt wird.

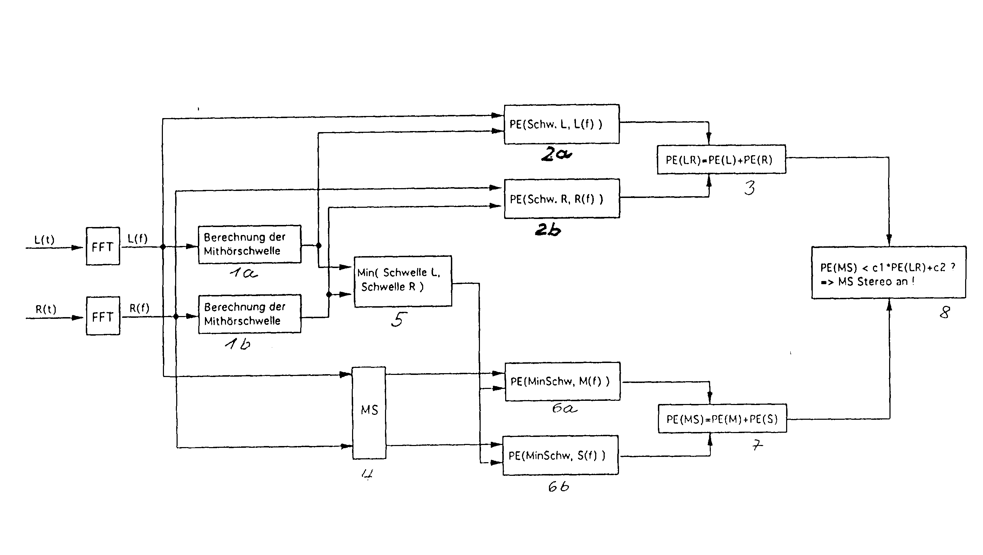

Kurze Beschreibung der Zeichnung

Ein Ausführungsbeispiel eines erfindungsgemäßen Verfahrens wird nachfolgend unter Bezugnahme auf die Zeichnung näher erläutert. Wegen der leichteren Darstellbarkeit wird als Beispiel die Codierung von zwei Stereokanälen beschrieben.

Die einzige Zeichnung zeigt ein Blockschaltbild der Bestimmung des Einschaltkriteriums für die Stereocodierung.

Weg zur Ausführung der Erfindung

Die Abtastwerte L (t) und R (t) von Stereosignalen aus dem linken und rechten Kanal einer Stereoquelle werden mit Hilfe einer schnellen Fouriertransformation (FFT, Fast Fourier Transformation) aus dem Zeitbereich blockweise in den Frequenzbereich, in Spektralwerte L (f), R (f), überführt. Aus den Spektralwerten werden für die beiden Kanäle die Mithörschwellen berechnet (1a, 1b).

Anschließend werden für die Bilanzierung der erforderlichen Datenraten, einmal für eine getrennte Codierung, zum anderen für eine gemeinsame Codierung, Schätzfunktionen ermittelt. In der dargestellten, bevorzugten Ausführungsform, wird als Schätzfunktion die Perceptual Entropy PE verwendet.

Zur Ermittlung der PE (LR) für die getrennte Codierung wird unter Verwendung der berechneten Mithörschwellen für den linken und den rechten Kanal die PE jeweils getrennt ermittelt (2a, 2b). Die gesamte PE (LR) ergibt sich daraus durch die Summenbildung: $PE (LR) = PE (L) + PE (R)$ (3).

Zur Ermittlung der PE (MS) der gemeinsamen Codierung der beiden Kanäle werden die Spektralwerte in der bevorzugten Ausführungsform einer Mitte/Seite Matrizierung unterzogen (4).

Dabei wird das Mitte-Signal durch die Bezeichnung

$$M = \frac{L + R}{\sqrt{2}}$$

gebildet und das Seite-Signal (S) durch die Beziehung

$$S = \frac{L - R}{\sqrt{2}}$$

gewonnen (4).

Der nachfolgenden Ermittlung der PE dieser Signale wird das Minimum (5) aus der Berechnung der Mithörschwellen der beiden Kanäle (1a, 1b) zugrundegelegt.

Unter Zuhilfenahme dieser minimalen Mithörschwelle wird die PE des Mitte-Signals und des Seite-Signals getrennt ermittelt (6a, 6 b).

Die gesamte PE (MS) für die Stereocodierung ergibt sich daraus durch die Summenbildung:

$$PE (MS) = PE (M) + PE (S) (7).$$

Schließlich erfolgt die Bilanzierung der erforderlichen Datenrate (8). Die Audiosignale werden einer Stereocodierung unterzogen, wenn die Bedingung

$$PE (MS) < C_1 PE (LR) + C_2$$

erfüllt ist.

Wenn die Bedingung nicht erfüllt ist, wird zugunsten der Vermeidung störender Artefakte durch die Codierung auf eine Stereocodierung verzichtet.

Das beschriebene Ausführungsbeispiel stellt keine Beschränkung auf ein bestimmtes Codierverfahren dar. Vielmehr ist das erfindungsgemäße Verfahren unabhängig vom jeweiligen Codierverfahren universell einsetzbar.

**Patentansprüche**

1. Verfahren zur Reduzierung von Daten bei der Übertragung und/oder Speicherung digitaler Audio-Signale aus mehreren voneinander abhängigen Kanälen, bei welchem Abtastwerte von Signalen aus dem Zeitbereich blockweise in den Frequenzbereich (in Spektralwerte) überführt werden, die Spektralwerte unter Berücksichtigung einer mittels eines psychoakustischen Modells bestimmten Mithörschwelle codiert, übertragen und/oder gespeichert, decodiert und in mehrere Kanäle in den Zeitbereich zurückübertragen werden,
**dadurch gekennzeichnet,**
daß unter Zuhilfenahme der Spektralwerte korrespondierender Blöcke mehrerer Kanäle eine Bilanzierung der erforderlichen Datenrate für eine getrennte Codierung (Monocodierung) von Kanälen sowie für eine gemeinsame Codierung von Kanalsignalen durchgeführt wird, und daß eine gemeinsame Codierung von Kanalsignalen erfolgt, solange die Datenrate für die gemeinsame Codierung die Datenrate für die getrennte Codierung der beiden Kanäle nicht um einen vorgebbaren Wert übersteigt.

2. Verfahren nach Anspruch 1,
   **dadurch gekennzeichnet,**
   daß zur Bilanzierung der erforderlichen Datenrate eine Schätzfunktion (SF) gebildet wird, die angibt, welche Bitzahl pro Block erforderlich ist, um bei einem vorgegebenen Codierverfahren die durch das Codierverfahren verursachten Störungen unter der Mithörschwelle zu halten.

3. Verfahren nach Anspruch 2,
   **dadurch gekennzeichnet,**
   daß die Schätzfunktion (SF (Ki, Kj, Kk ...)) der erforderlichen Datenrate für die getrennte Codierung von Kanalsignalen durch Addition der Schätzfunktionen (SF (Ki), SF (Kj) ...) der Signale aus den Kanälen (Ki, Kj ...) gebildet wird.

4. Verfahren nach Anspruch 3,
   **dadurch gekennzeichnet,**
   daß die gemeinsame Codierung durch die Bildung von Linearkombinationen (Matrizierung) der Eingangssignale erfolgt, die beim Decodiervorgang wieder rückgängig gemacht wird (Dematrizierung).

5. Verfahren nach einem der Ansprüche 2 bis 4,
   **dadurch gekennzeichnet,**
   daß die Schätzfunktion (SF (Mijk ...)) der erforderlichen Datenrate für die gemeinsame Codierung von Signalen aus Kanälen (Ki, Kj, Kk ...) durch Addition der Schätzfunktionen (SF (Mi), SF (Mj), SF (Mk) ...) gebildet wird, wobei Mi der i-te matrizierte Kanal ist.

6. Verfahren nach einem der Ansprüche 1 bis 5,
   **dadurch gekennzeichnet,**
   daß für das decodierte Signal in den Kanälen eine erlaubte maximale Störung vorgegeben wird, daß für diese maximale Störung die jeweilige Mithörschwelle in den Kanälen berechnet und für die Bestimmung der Schätzfunktion für die gemeinsame Codierung verwendet wird.

7. Verfahren nach einem der Ansprüche 2 bis 6,
   **dadurch gekennzeichnet,**
   daß als Schätzfunktion die Perceptual Entropy (PE) des Audiosignals verwendet wird.

8. Verfahren nach einem der Ansprüche 3 bis 7,
   **dadurch gekennzeichnet,**
   daß eine gemeinsame Codierung der Signale mehrerer Kanäle (Ki, Kj, Kk...) erfolgt, wenn folgende Beziehung erfüllt ist,

   $$SF (Mijk...) < C_1 \; SF (Ki, Kj, Kk...) + C_2,$$

   wobei $C_1$ und $C_2$ vorgebbare Konstanten sind.

9. Verfahren nach Anspruch 8,
   **dadurch gekennzeichnet,**
   daß die Konstante $C_1$ zwischen den Werten 1 und 2 liegt

10. Verfahren nach den Ansprüchen 8 oder 9,
    **dadurch gekennzeichnet,**
    daß die Konstante $C_2$ null ist.

**Claims**

1. Process for reducing data during the transmission and/or storage of digital audio signals from several interdependent channels, in which scanning values from signals from the time range are transferred in blocks into the frequency range (into spectral values), the spectral values are coded, taking into account a listening threshold determined by means of a psychoacoustic model, transmitted and/or stored, decoded and transmitted back into several channels into the time range, characterised in that with the assistance of the spectral values of corresponding blocks of several channels, balancing of the required data transfer rate is carried out for a separate coding (mono-coding) of channels as well as for a joint coding of channel signals, and that a joint coding of channel signals is achieved so long as the data transfer rate for the joint coding does not exceed the data transfer rate for the separate coding of the two channels by a predeterminable value.

2. Process according to Claim 1, characterised in that an estimator function (SF) is formed for balancing the required data transfer rate which indicates the number of bits required for each block in order to maintain the interferences caused by the coding process below the listening threshold in the case of a predetermined coding process.

3. Process according to Claim 2, characterised in that the estimator function (SF (Ki, Kj, Kk...) of the required data transfer rate is formed for the separate coding of channel signals by adding the estimator functions (SF (Ki), SF (Kj)...) of the signals from the channels (Ki, Kj...).

4. Process according to Claim 3, characterised in that the joint coding is achieved by the formation of linear combinations (matrixing) of the input signals which is cancelled again during decoding (dematrixing).

5. Process according to one of Claims 2 to 4, characterised in that the estimator function (SF (Mijk...)) of the required data transfer rate for the joint coding of signals from channels (Ki, Kj, Kk...) is formed by adding the estimator functions (SF (Mi), SF (Mj), SF (Mk)...), where Mi is the i-th matrixed channel.

6. Process according to one of Claims 1 to 5, characterised in that a permitted maximum interference is predetermined for the decoded signal in the channels, that the respective listening threshold for the maximum interference is calculated in the channels and is used for determination of the estimator function for the joint coding.

7. Process according to one of Claims 2 to 6, characterised in that the perceptual entropy (PE) of the audio signal is used as estimator function.

8. Process according to one of Claims 3 to 7, characterised in that a joint coding of the signals of several channels (Ki, Kj, Kk...) occurs if the following relation is fulfilled

$$SF\ (Mijk...) < C_1\ SF\ (Ki,\ Kj,\ Kk...) + C_2,$$

where $C_1$ and $C_2$ are predeterminable constants.

9. Process according to Claim 8, characterised in that the constant $C_1$ lies between the values 1 and 2.

10. Process according to Claim 8 or 9, characterised in that the constant $C_2$ is zero.

**Revendications**

1. Procédé pour réduire les données à la transmission et/ou à la mémorisation de signaux audio numériques de plusieurs canaux interdépendants, selon lequel on transfère les valeurs de détection des signaux provenant du domaine du temps, par blocs dans le domaine des fréquences (valeurs spectrales) et en tenant compte d'un seuil de perception déterminé par un modèle psycho-acoustique, on effectue le codage des valeurs spectrales, on les transmet et/ou on mémorise, on décode et on transpose en retour dans plusieurs canaux dans le domaine du temps, caractérisé en ce qu'en utilisant les valeurs spectrales des blocs correspondants de plusieurs canaux, on fait le bilan des débits de données nécessaires pour un codage séparé (codage mono) des canaux ainsi que pour un codage commun des signaux des canaux, et on poursuit le codage commun des signaux des canaux aussi longtemps que les débits des données pour le codage commun ne dépassent pas d'une valeur prédéterminée le débit des données pour le codage séparé des deux canaux.

2. Procédé selon la revendication 1, caractérisé en ce que pour le bilan des débits de données nécessaires on forme une fonction d'évaluation (SF) indiquant le nombre de bits nécessaires par bloc pour que selon un procédé de codage prédéterminé on maintienne les dérangements provoqués par le procédé de codage en dessous du seuil de perception.

3. Procédé selon la revendication 2, caractérisé en ce que la fonction d'évaluation (SF (Ki, Kj, Kk...)) des débits de données nécessaires pour le codage séparé des signaux de canaux est formée par addition des fonctions d'évaluation (SF (Ki), SF (Kj)...) des signaux provenant des canaux (Ki, Kj ...) .

4. Procédé selon la revendication 3, caractérisé en ce qu'on effectue le codage commun en formant des combinaisons linéaires (matriçage) des signaux d'entrée et on effectue l'opération inverse pour le décodage (dématriçage).

5. Procédé selon l'une des revendications 2 à 4, caractérisé en ce qu'on forme la fonction d'évaluation (SF (Mijk...)) des débits de données nécessaires pour le codage commun des signaux des canaux (Ki, Kj, Kk...) par addition des fonctions d'évaluation (SF (Mi), SF (Mj), SF (Mk)...), Mi étant le canal d'ordre i de la matrice.

6. Procédé selon l'une des revendications 1 à 5, caractérisé en ce que pour le signal décodé dans les canaux on prédétermine un dérangement maximum autorisé et pour ce dérangement maximum, on calcule le seuil de perception respectif dans les canaux et on l'utilise pour déterminer la fonction d'évaluation pour le codage commun.

7. Procédé selon l'une des revendications 2 à 6, caractérisé en ce qu'on utilise l'entropie de perception (PE) du signal audio comme fonction d'évaluation.

8. Procédé selon l'une des revendications 3 à 7, caractérisé en ce qu'on fait un codage commun des signaux de plusieurs canaux (Ki, Kj, Kk...) si la relation suivante est satisfaite :

$$SF\ (Mijk...) < C_1\ SF\ (Ki,\ Kj,\ Kk) + C_2,$$

$C_1$ et $C_2$ étant des constantes prédéterminées.

9. Procédé selon la revendication 8, caractérisé en ce que la constante $C_1$ est comprise entre les valeurs 1 et 2.

10. Procédé selon les revendications 8 ou 9, caractérisé en ce que la constante $C_2$ est nulle.

L(t) → FFT → L(f)

R(t) → FFT → R(f)

Berechnung der Mithörschwelle — 1a

Berechnung der Mithörschwelle — 1b

Min( Schwelle L, Schwelle R ) — 5

MS — 4

PE(Schw. L, L(f) ) — 2a

PE(Schw. R, R(f) ) — 2b

PE(LR)=PE(L)+PE(R) — 3

PE(MinSchw, M(f) ) — 6a

PE(MinSchw, S(f) ) — 6b

PE(MS)=PE(M)+PE(S) — 7

PE(MS) < c1*PE(LR)+c2 ?
=> MS Stereo an ! — 8